# EUROPÄISCHE PATENTANMELDUNG

(11) **EP 1 162 384 A2**
(43) Veröffentlichungstag der Anmeldung: **12.12.2001**
(21) Anmeldenummer: 01111608.4
(22) Anmeldetag: 12.05.2001
(51) Int. Cl.: F16D 65/12

(54) **Fahrzeug-Bremsscheibe, deren Reibring und Bremsscheibentopf aus unterschiedlichen Werkstoffen besteht**

(30) Priorität: 08.06.2000 DE 10028532
(71) Anmelder: Bayerische Motoren Werke Aktiengesellschaft, 80809 München (DE)
(72) Erfinder: Spörer, Josef, Dr., 84072 Reichertshausen (DE); Blechinger, Gerd, 81927 München (DE)

(57) **Zusammenfassung**

Die Erfindung betrifft eine Fahrzeug-Bremsscheibe (1), deren Reibring (2) und Bremsscheibentopf (3) aus unterschiedlichen Werkstoffen bestehen und die über ein im wesentlichen ringförmiges Verbindungselement (20) miteinander verbunden sind, derart, daß das Verbindungselement teilweise in den aus einem Keramik-Werkstoff durch Heißpressen oder Sintern hergestellten Reibring bei dessen Herstellung eingepreßt wird. Bevorzugt besteht das mit radial nach außen abstehenden Vorsprüngen (23) versehene Verbindungselement aus einem Werkstoff, dessen Schmelztemperatur erheblich über der beim Herstellen des Reibringes maximal auftretenden Temperatur liegt, insbesondere aus einem Titanwerkstoff. Dabei kann das Verbindungselement mit dem in einer Leichtmetall-Legierung ausgeführten Bremsscheibentopf durch Reibschweißen verbunden sein.

## Beschreibung

Die Erfindung betrifft eine Fahrzeug-Bremsscheibe, deren Reibring und Bremsscheibentopf aus unterschiedlichen Werkstoffen bestehen und die über ein im wesentlichen ringförmiges Verbindungselement miteinander verbunden sind. Eine solche Kraftfahrzeug-Bremsscheibe ist in der nicht vorveröffentlichten deutschen Patentanmeldung 100 08 187.8 beschrieben.

Es wird angestrebt, den Reibring und den Bremsscheibentopf einer Bremsscheibe aus unterschiedlichen Materialien zu fertigen, wobei der jeweils zum Einsatz kommende Werkstoff spezifisch für die Funktion des jeweiligen Bremsscheibenelementes in Summe optimale Eigenschaften aufweisen soll. Problematisch kann dann jedoch die Verbindungstechnik zwischen den einzelnen Bremsscheibenelementen sein. Vorgeschlagen wurde in diesem Zusammenhang bereits, ein ringförmiges sog. Verbindungselement vorzusehen, welches in den bspw. aus dem Gußwerkstoff GG-15 gegossenen Reibring teilweise mit eingegossen wird, wobei ein radial innenliegender Abschnitt des Verbindungselementes vom Gusswerkstoff des Reibringes frei bleibt. Dieser Verbindungselement-Abschnitt kann dann mit dem im Hinblick auf Gewichts- und Festigkeitsanforderungen bspw. in einer Aluminiumlegierung ausgeführten Bremsscheibentopf geeignet verbunden werden, bspw. durch Reibschweißen.

Eine weitere vorteilhafte Fzg.-Bremsscheibe mit unterschiedlichen Werkstoffen für den Reibring sowie für den Bremsscheibentopf und mit einem diese Elemente verbindenden sog. Verbindungselement aufzuzeigen, ist Aufgabe der vorliegenden Erfindung.
Erfindungsgemäß ist das Verbindungselement derart mit dem Reibring verbunden, daß das Verbindungselement teilweise in den aus einem Keramik-Werkstoff durch Heißpressen oder Sintern hergestellten Reibring bei dessen Herstellung eingepreßt wird. Vorteilhafte Aus- und Weiterbildungen sind Inhalt der Unteransprüche.

Die Vorteile von Bremsscheiben-Reibringen, die aus keramischen, insbesondere aus faserverstärkten keramischen Werkstoffen bestehen, sind grundsätzlich bekannt. Insbesondere handelt es sich hierbei um das ausgezeichnete thermische Verhalten sowie das Verschleißverhalten bei gleichzeitig geringem spezifischen Gewicht. Hingegen sind für den Bremsscheibentopf andere Werkstoffe erwünscht, und zwar insbesondere aus Kostengründen, daneben auch hinsichtlich der Formgebungs-Möglichkeiten.

Nun gilt es, einen Keramik-Reibring einer Bremsscheibe auf möglichst einfache Weise funktional höchst sicher mit einem Bremsscheibentopf aus einem anderen geeigneten Werkstoff zu verbinden. Dies erfolgt erfindungsgemäß mittels des sog. Verbindungselementes, das im wesentlichen ringförmig ausgebildet ist und bevorzugt mit Ausnahme eines radial innenligenden Ringabschnittes während des Herstellprozesses des Reibringes in diesen eingeformt wird. Letzterer wird bspw. durch Sintern oder aus einem sog. Vorformling oder Grundkörper (bspw. aus CFK) oder dgl. durch Heißpressen geformt und gefestigt, wobei das ringförmige Verbindungselement bevorzugt mit einem radial außenliegenden Abschnitt und somit teilweise mit in den Reibring eingeformt, d.h. eingepreßt wird.

Vorteilhafterweise wird hierdurch eine äußerst stabile Verbindung zwischen dem Reibring und dem Verbindungselement erzielt, wobei der Reibring bezüglich des Verbindungselementes axial geführt ist und wobei insbesondere eine hohe Drehmomentübertragung, d.h. die erforderliche Übertragung des Bremsmomentes vom Reibring über das Verbindungselement zum Bremsscheibentopf (und letztlich zum Fzg.-Rad) gewährleistet ist. Vorteilhafterweise ergeben sich mit der vorgeschlagenen Verbindungstechnik im Vergleich zu Verfahren, bei denen der Reibring über separate Verbindungselemente, beispielsweise Stifte, Schrauben etc. an den Bremsscheibentopf angebunden ist, Kosten- und Montagevorteile. Durch das in den Reibring eingepreßte Verbindungselement eröffnet sich grundsätzlich eine Vielzahl von Möglichkeiten der mittelbaren Anbindung des Bremsscheibentopfes an den Reibring.

Um den Herstellprozeß des Reibringes mit teilweise eingepreßtem Verbindungselement nicht negativ zu beeinflussen bzw. um eine optimale Funktionserfüllung des Verbindungselementes zu gewährleisten, besteht das Verbindungselement bevorzugt aus einem Werkstoff, dessen Schmelztemperatur erheblich über der beim Herstellen des Reibringes mit teilweise in diesem eingepreßtem Verbindungselement maximal auftretenden Temperatur liegt. Insbesondere bietet sich für das Verbindungselement ein Titan-Werkstoff an.

Besonderes einfach hergestellt werden kann eine erfindungsgemäße Bremsscheibe auch, wenn zwei sog. Reibringe vorgesehen sind, zwischen die quasi sandwichartig das Verbindungselement angeordnet ist, wobei dieses im wesentlichen in einen der beiden Reibringe eingepreßt wurde. Der Preßprozeß läßt sich dadurch einfach gestalten, als keine besonderen Lageprobleme bzw. Fixierprobleme bezüglich des Verbindungselementes auftreten. In diesem Sinne kann im übrigen auch das zunächst vollständig in den Reibring eingepreßte Verbindungselement durch nachträgliche Bearbeitung des Reibringes teilweise wieder freigelegt werden, um einen sog. Verbindungsabschnitt mit dem Bremsscheibentopf zu schaffen. Aufgrund des zunächst vollständigen Einpressens kann das Presswerkzeug besonders einfach ausgebildet sein.

Sind zwei zueinander parallel ausgerichtete keramische Reibringe vorgesehen, von denen bevorzugt oder zumindest einer mit dem Verbindungselement versehen ist, so können diese Reibringe nach dem Einpressen des Verbindungselementes geeignet miteinander verbunden werden, und zwar bevorzugt durch Silizieren, d.h. quasi Verkleben. Dabei können die Reibringe mit ihren einander zugewandten Stirnflächen direkt aneinander anliegen; im Sinne einer vorteilhaften Weiterbildung über weite Oberflächenabschnitte jedoch auch voneinander beabstandet sein, womit eine innenbelüftete Fahrzeug-Bremsscheibe geschaffen werden kann.

Ist das Verbindungselement mit radial nach außen abstehenden Vorsprüngen versehen, die quasi klauenartig in den Reibring bei dessen Herstellung eingepreßt werden, während der quasi diese Vorsprünge tragende radial innen liegende Ringabschnitt des Verbindungselementes frei vom Keramik-werkstoff des Reibringes bleibt, so wird quasi eine "schwimmende" Anbindung des Reibringes an den Bremsscheibentopf ermöglicht. Durch die insbesondere zapfenförmigen Vorsprünge kann einerseits in Umfangsrichtung ein Bremsmoment übertragen werden, andererseits ist der Reibring sowohl axial geführt als auch radial geringfügig beweglich, und zwar aufgrund der sich in Radialrichtung parallel zueinander erstreckenden Vorsprünge.. Damit können unterschiedliche Wärmedehnungen zwischen Reibring und Bremsscheibentopf ausgeglichen werden, ohne dass es zu Wärmespannungen oder Verformungen des Reibrings kommt. Im übrigen kann diese sog thermische Schirmung noch dadurch verbessert werden, daß beim Herstellprozeß des Reibringes mit teilweise eingepreßtem Verbindungselement auf dessen Oberfläche zuvor eine geeignete Beschichtung aufgebracht wird, bspw. eine keramische Schlichte.

Als Material für den Bremsscheibentopf kann zur Gewichtsersparnis bevorzugt eine Leichtmetall-Legierung - aus Kostengründen insbesondere Aluminium enthaltend - zum Einsatz kommen. Soll die Innenfläche des Bremsscheibentopfes als Funktionsfläche für eine als Trommelbremse ausgeführte Feststellbremse verwendet werden, kann als Material für den Bremsscheibentopf auch partikelverstärktes AI/MMC verwendet werden, das in der Regel ca. 20 bis 30 % SiC-Partikel enthält. Diese soweit vorgeschlagenen Materialien erlauben es, die Verbindung zwischen dem Verbindungselement und dem Bremsscheibentopf durch Reibschweißen herzustellen, was auf einfache Weise beste Resultate gewährleistet.

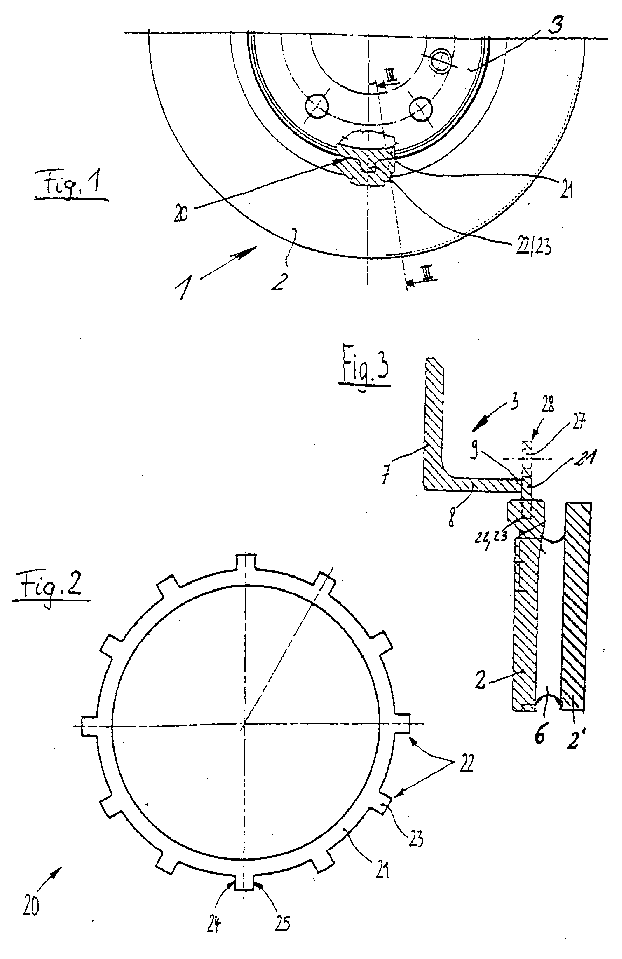

Die beigefügten Prinzipskizzen zeigen ein bevorzugtes Ausführungsbeispiel der Erfindung, wobei in **Figur 1** ein sich lediglich über 180 Winkelgrade erstreckender Sektor einer erfindungsgemäße Fzg.-Bremsscheibe (in Seitenansicht) dargestellt ist. **Figur 2** zeigt die entsprechende, dabei jedoch vollständige Ansicht des Verbindungselementes und in **Figur 3** ist der Schnitt 111-111 aus Fig.1 dargestellt. Erfindungswesentlich können dabei sämtliche näher beschriebenen Merkmale sein.

Eine in ihrer Gesamtheit mit 1 bezeichnete Bremsscheibe besteht aus einem Reibring 2, einem zu diesem parallelen Reibring 2', der über Stege 6 mit dem ersten Reibring 2 verbunden ist, sowie einem Bremsscheibentopf 3. Der Bremsscheibentopf 3 weist einen parallel zum Reibring 2 verlaufenden Boden 7 sowie senkrecht hiervon abstehende Wandbereiche 8 auf, die in einem freien Endabschnitt 9 enden.

Zur Verbindung von Reibring 2 und Bremsscheibentopf 3 ist ein Verbindungselement 20 vorgesehen, das im wesentlichen ringscheibenförmig ist und aus einem radial innenliegenden, umlaufenden Ringabschnitt 21 sowie einem Abschnitt 22 mit zapfenförmig radial nach außen abstehenden Vorsprüngen 23 besteht. Das Verbindungselement 20 besteht bevorzugt aus einem Titan-Werkstoff und kann in einfacher Weise durch Stanzen aus einer Scheibe hergestellt werden, wodurch ohne zusätzliche Bearbeitungsschritte die gewünschte und in **Fig.2** separat dargestellte Endkontur des Verbindungselementes 20 erreicht wird.

Die Reibringe 2, 2' bestehen aus einem faserverstärkten Keramik-Werkstoff (bspw. C/SiC) und werden durch Heißpressen oder Sintern hergestellt, wobei beim Herstellvorgang des (ersten) Reibringes 2 das Verbindungselement 20 mit seinen zapfenförmigen Vorsprüngen 23 in den radial innenliegenden freien Endabschnitt des Reibringes 2 mit eingepreßt wird. Der nicht vom Material des Reibringes 2 eingefasste radial innenliegende Ringabschnitt 21 des Verbindungselementes 20 dient dann als Verbindungsflansch zum Bremsscheibentopf 3. Die Verbindung zwischen den freien Endabschnitten 9 der Wand 8 des Bremsscheibentopfes 3 und dem Ringabschnitt 21 erfolgt bevorzugt durch Reibschweißen. Zum Reibschweißen wird beispielsweise bei feststehendem Bremsscheibentopf 3 der Reibring 2 und damit das eingegossene Verbindungselement 20 in Rotation versetzt und geeignet gegen den Endabschnitt 9 des Bremsscheibentopfes 3 gepreßt.

Bevor jedoch diese Verbindung zwischen dem Reibring 2 und dem Bremsscheibentopf 3 über das Verbindungselement 20 hergestellt wird, wird zunächst der zweite Reibring 2' mit dem Reibring 2 verbunden, und zwar bevorzugt durch Silizieren, d.h. Verkleben über die schaufelartig an den Reibring 2' angeformten Stege 6, wodurch eine (dem Fachmann an sich bekannte) Fzg.-Bremsscheibe mit Innenbelüftung geschaffen werden kann.

Dabei sei darauf hingewiesen, daß in einer anderen, figürlich nicht dargestellten Ausführungsform die (für die Funktion der Bremsscheibe selbstverständlich zueinander parallelen) Reibringe 2, 2' mit ihren einander zugewandten Stirnseiten auch direkt aneinander anliegen können. In noch einer anderen, baulich äußerst einfachen Ausführungsform ist der Reibring 2' überhaupt nicht vorhanden, wodurch (ebenfalls) eine einfache, lediglich einen einzigen Reibring (nämlich den Reibring 2) aufweisende Bremsscheibe 1 entsteht.

Zurückkommend auf die Herstellung der Verbindung zwischen dem Reibring 2 und dem Bremsscheibentopf 3 über das Verbindungselement 20 erfolgt in einer vorteilhafter Ausgestaltung der Erfindung der für das Reibschweißen erforderliche Antrieb des Verbindungselementes 20 über Mitnehmer 27 an der Innenseite des Ringabschnitts 21 des Verbindungselementes 20, wie in **Figur 3** mit strichlierten Linien dargestellt. Diese Mitnehmer 27 werden beispielsweise von kreisförmigen Aussparungen in einer innenseitigen einstükkigen Fortsetzung 28 des Ringabschnittes 21 gebildet. Nach erfolgter Reibschweißung wird die innenseitige Fortsetzung 28 durch spanende Bearbeitung entfernt. Durch den direkten Antrieb des Verbindungselements 20 wird eine Überlastung und damit Vorschädigung der Verbindung zwischen dem Reibring 2 und dem Verbindungselement 20 ausgeschlossen. Zudem kann die Einpreß-Verbindung im Bereich der zapfenförmigen Vorsprünge 23 alleine auf das zu übertragende Bremsmoment ausgelegt werden.

Vor dem Einpressen der zapfenförmigen Vorsprünge 23 in den Endabschnitt Reibringes 2 können die zapfenförmigen Vorsprünge 23 mit einem Trennmittel, wie beispielsweise "keramischer Schlichte", beschichtet werden. Bei unterschiedlichen Wärmedehnungen von Reibring 2 und Bremsscheibentopf 3 kann der äußere Reibring 2 quasi auf den zapfenförmigen Vorsprüngen 23 gleiten, so dass Wärmespannungen vermieden werden. Dabei kann der Herstellprozeß derart optimiert werden, daß sich einerseits die beschriebene sog. schwimmende Reibringanbindung ergibt und daß andererseits das Verbindungselement 20 ausreichend fest im Reibring 2 gehalten ist. Um dabei eine in Umfangsrichtung spielfreie Führung zwischen Reibring 2 und Bremsscheibentopf 3 zu erreichen, sind die Flanken 24 und 25 an den zapfenförmigen, in der Seitenansicht rechteckförmigen Vorsprüngen 23 in beiden Umfangsrichtungen parallel zueinander ausgeführt, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Stets erhält man eine einfach zu fertigende Bremsscheibe mit optimalen Eigenschaften.

## Patentansprüche

1. Fahrzeug-Bremsscheibe, deren Reibring (2) und Bremsscheibentopf (3) aus unterschiedlichen Werkstoffen bestehen und die über ein im wesentlichen ringförmiges Verbindungselement (20) miteinander verbunden sind, derart, daß das Verbindungselement (20) teilweise in den aus einem Keramik-Werkstoff durch Heißpressen oder Sintern hergestellten Reibring (2) bei dessen Herstellung eingepreßt wird.

2. Fahrzeug-Bremsscheibe nach Anspruch 1,
**dadurch gekennzeichnet, daß** das mit radial nach außen abstehenden Vorsprüngen (23) versehene Verbindungselement (20) aus einem Werkstoff besteht, dessen Schmelztemperatur erheblich über der beim Herstellen des Reibringes mit teilweise in diesem eingepreßtem Verbindungselement maximal auftretenden Temperatur liegt.

3. Fahrzeug-Bremsscheibe nach Anspruch 1 oder 2,
**dadurch gekennzeichnet, daß** das Verbindungselement (20) aus einem Titanwerkstoff besteht.

4. Fahrzeug-Bremsscheibe nach einem der vorangegangenen Ansprüche,
**dadurch gekennzeichnet, daß** zwei zueinander parallele und geeignet miteinander verbundene Reibringe (2, 2') vorgesehen sind, von denen einer mit dem Verbindungselement (20) versehen ist.

5. Fahrzeug-Bremsscheibe nach einem der vorangegangenen Ansprüche,
**dadurch gekennzeichnet, daß** das Verbindungselement (20) mit dem in einer Leichtmetall-Legierung ausgeführten Bremsscheibentopf (3) durch Reibschweißen verbunden ist.
